(19) Europäisches Patentamt
European Patent Office
Office européen des brevets

(11) **EP 4 141 483 A1**

(12) **EUROPEAN PATENT APPLICATION**
published in accordance with Art. 153(4) EPC

(43) Date of publication:
**01.03.2023 Bulletin 2023/09**

(21) Application number: **20933785.6**

(22) Date of filing: **30.04.2020**

(51) International Patent Classification (IPC):
**G01S 13/52** (2006.01)      **G01S 13/931** (2020.01)

(86) International application number:
**PCT/CN2020/088522**

(87) International publication number:
**WO 2021/217669 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Jianguo
  Shenzhen, Guangdong 518129 (CN)**
• **CHEN, Mo
  Shenzhen, Guangdong 518129 (CN)**

(74) Representative: **Huawei European IPR
Huawei Technologies Duesseldorf GmbH
Riesstraße 25
80992 München (DE)**

(54) **TARGET DETECTION METHOD AND APPARATUS**

(57)    This application discloses a target detection method and apparatus, applied to the field of autonomous driving or intelligent transportation, to improve accuracy and reliability of obstacle detection. In this solution, height information or pitch angle information of a target relative to a sensor is obtained based on at least one piece of data that is included in a data subset of the target and that includes information about a distance, an azimuth, and a radial velocity of the target relative to the sensor, to prevent a false alarm caused when the target is directly used as an obstacle without considering the height information or the pitch angle information of the target. Therefore, safety or comfort problems such as unnecessary emergency braking, a rear-end collision, or a collision caused by the false alarm are effectively reduced.

```
┌─────────────────────────────────────────┐
│                                         │── S401
│  Determine a data subset of a first target │
│                                         │
└─────────────────────────────────────────┘
                    │
                    ▼
┌─────────────────────────────────────────┐
│                                         │── S402
│  Obtain height information or pitch angle │
│  information of the first target relative to a sensor │
│  based on the data subset of the first target │
│                                         │
└─────────────────────────────────────────┘
```

FIG. 4

EP 4 141 483 A1

## Description

### TECHNICAL FIELD

Embodiments of this application relate to the field of information processing technologies, and in particular, to a target detection method and apparatus.

### BACKGROUND

A plurality of sensors such as a radar, a sonar, an ultrasonic sensor, and a visual sensor (such as a camera) are usually configured in an advanced driver assistant system (advanced driver assistant system, ADAS) or an autonomous driving (autonomous driving, AD) system, to perceive an ambient environment and target information. Through perception of the ambient environment and a target, the target can be identified, so that an obstacle can be effectively avoided, and comfort and safety of autonomous driving are improved. The foregoing target is a vehicle, a pedestrian, a fence, a road edge, a lamp post, a tree, a height limit pole, a gantry, a toll gate barrier, a parking gate, a flyover culvert, or a building.

When height of a static suspended object such as a height limit pole, a gantry, a toll gate barrier, a parking gate, or a flyover culvert meets a specific condition, for example, when the height is higher than height of a vehicle, normal driving of the vehicle is not affected. However, in a conventional sensor or sensing system, during identification of the suspended object such as a height limit pole, a gantry, a toll gate barrier, a parking gate, or a flyover culvert, if height of a target cannot be identified, the suspended object is usually directly used as an obstacle, and a false alarm (False Alarm) is triggered. Consequently, an unnecessary brake operation or an accident such as a rear-end collision is caused. Therefore, how to effectively use data of the sensor to detect the foregoing obstacle, especially the suspended object, is a problem to be resolved currently.

### SUMMARY

This application provides a target detection method and apparatus, so that accuracy and reliability of obstacle detection can be improved.

To achieve the foregoing objective, the following technical solutions are used in embodiments of this application.

According to a first aspect, a target detection method is provided, and the method includes: determining a data subset of a first target, where the data subset of the first target includes at least one piece of data including information about a distance, an azimuth, and a radial velocity of the first target relative to a sensor; and obtaining height information or pitch angle information of the first target relative to the sensor based on the data subset of the first target.

According to the foregoing technical solution provided in the first aspect, height information or pitch angle information of a target relative to the sensor is obtained based on at least one piece of data that is included in a data subset of the target and that includes information about a distance, an azimuth, and a radial velocity of the target relative to the sensor, to prevent impact from a false alarm caused when the target is directly used as an obstacle without considering the height information or the pitch angle information of the target. Therefore, safety or comfort problems such as unnecessary emergency braking or a rear-end collision caused by the false alarm are reduced.

In a possible implementation, the first target intersects road geometry, and the road geometry includes a road boundary or a lane line. Target detection on a target that intersects the road geometry can prevent a false alarm caused when a target such as a suspended object that may easily cause a false alarm phenomenon is directly used as an obstacle without considering height information or pitch angle information of the target.

In a possible implementation, the determining a data subset of a first target includes: obtaining a road geometric parameter; and determining the data subset of the first target based on the road geometric parameter. The obtaining a road geometric parameter includes: receiving the road geometric parameter; or obtaining a data subset of the road geometry from a data set of the sensor through clustering, where the data subset of the road geometry includes at least one piece of data including information about a distance, an azimuth, and a radial velocity of the road geometry relative to the sensor, and determining the road geometric parameter based on the data subset of the road geometry. In this solution, the road geometric parameter can be obtained from a third-party device, or the data subset of the road geometry can be obtained from the data set of the sensor through clustering, to obtain the road geometric parameter; and then, the data subset of the first target that intersects the road geometry is obtained based on the road geometric parameter.

In a possible implementation, the determining the data subset of the first target based on the road geometric parameter includes: obtaining a data subset of at least one cluster from the data set of the sensor through clustering; determining a geometric parameter of at least one target based on the data subset of the at least one cluster; and determining the data subset of the first target based on the geometric parameter of the at least one target and the road geometric parameter, where the data subset of the first target is a data subset of a target that intersects the road geometry.

In this solution, the data subset of the at least one cluster can be obtained from the data set of the sensor through clustering, and the data subset of the target is obtained from the data subset of the at least one cluster based on the road geometric parameter.

In a possible implementation, the geometric parameter of the target is a first polynomial parameter, the road geometric parameter is a second polynomial parameter, and the first polynomial parameter and the second polynomial parameter are used to determine a geometric relationship between the first target and the road geometry. The geometric parameter of the target and the road geometric parameter are obtained through clustering, so that the first target that intersects the road geometry is determined from one or more targets.

In a possible implementation, the obtaining height information of the first target relative to the sensor based on the data subset of the first target includes: obtaining height h of the first target relative to the sensor based on N pieces of data in the data subset of the first target and the following relational expression: $\dot{r}_i = \Lambda_i \nu + n_i$, where i = 1, 2, ... , N. $\nu$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = (r_i^2 - h_i^2)^{\frac{1}{2}}\cos\theta_i/r_i$, $\Lambda_{y,i} = (r_i^2 - h_i^2)^{\frac{1}{2}}\sin\theta_i/r_i$, $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error. The height information of the target relative to the sensor is obtained based on the at least one piece of data that is included in the data subset of the target and that includes the information about the distance, the azimuth, and the radial velocity of the target relative to the sensor, to prevent a false alarm caused when the target is directly used as an obstacle without considering the height information or the pitch angle information of the target. Therefore, safety or comfort problems such as unnecessary emergency braking or a rear-end collision caused by the false alarm are reduced.

In a possible implementation, the obtaining pitch angle information of the first target relative to the sensor based on the data subset of the first target includes: obtaining a pitch angle φ of the first target relative to the sensor based on N pieces of data in the data subset of the first target and the following relational expression: $\dot{r}_i = \Lambda_i \nu + n_i$, where i = 1, 2, ... , N. $\nu$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \tilde{\varphi}_i$, and $\tilde{\varphi}_i$ is a pitch angle error. The pitch angle information of the target relative to the sensor is obtained based on the at least one piece of data that is included in the data subset of the target and that includes the information about the distance, the azimuth, and the radial velocity of the target relative to the sensor, to prevent a false alarm caused when the target is directly used as an obstacle without considering the height information or the pitch angle information of the target. Therefore, safety or comfort problems caused by unnecessary emergency braking or a rear-end collision are reduced.

In a possible implementation, the height information or the pitch angle information of the first target relative to the sensor is obtained based on a square error criterion and an SSD criterion. Relatively accurate height information or pitch angle information of the first target may be obtained by using a criterion of a least square error (least squared error, LSE) or a minimum mean square error (minimum mean squared error, MMSE).

In a possible implementation, the first target is a static target. In this solution, a data subset corresponding to the static target can be obtained from the data set of the sensor, and height information or pitch angle information of the static target is obtained, to prevent unnecessary emergency braking caused by directly using the static target as an obstacle without considering the height information or the pitch angle information of the static target.

In a possible implementation, the determining a data subset of a first target includes: obtaining the data subset of the first target from M pieces of data in the data set of the sensor, where the data subset of the first target meets the following relationship: $|\dot{r}_k + \Lambda_k \mathbf{v}_s| \le \dot{r}_{Th}$, where k = 1, 2, ... , M. $\mathbf{v}_s$ is a three-dimensional motion velocity vector of the sensor, $\dot{r}_k$ is a radial velocity in a $k^{th}$ piece of data in the data set of the sensor, $\Lambda_k$ is a direction cosine vector corresponding to $\dot{r}_k$, and $\dot{r}_{Th}$ is a predefined threshold. In this solution, a data subset corresponding to a static target can be selected from the data set of the sensor, and height information or pitch angle information of the static target is obtained, to prevent a false alarm caused when the static target is directly used as an obstacle without considering the height information or the pitch angle information of the static target.

According to a second aspect, a target detection apparatus is provided, and the apparatus includes: an information obtaining unit, configured to determine a data subset of a first target, where the data subset of the first target includes at least one piece of data including information about a distance, an azimuth, and a radial velocity of the first target relative to a sensor; and a processing unit, configured to obtain height information or pitch angle information of the first target relative to the sensor based on the data subset of the first target.

According to the foregoing technical solution provided in the second aspect, the target detection apparatus obtains height information or pitch angle information of a target relative to the sensor by using at least one piece of data that is included in a data subset of the target and that includes information about a distance, an azimuth, and a radial velocity of the target relative to the sensor, to prevent a false alarm caused when the target is directly used as an obstacle without considering the height information or the pitch angle information of the target. Therefore, safety or comfort problems such as unnecessary emergency braking or a rear-end collision caused by the false alarm are reduced.

In a possible implementation, the first target intersects road geometry, and the road geometry includes a road boundary or a lane line. Target detection on a target that intersects the road geometry can prevent unnecessary emergency braking caused when a target such as a suspended object that may easily cause a false alarm phenomenon is directly used as an obstacle without considering height information or pitch angle information of the target.

In a possible implementation, the information obtaining unit is specifically configured to: obtain a road geometric parameter, and determine the data subset of the first target based on the road geometric parameter. The obtaining a road geometric parameter includes: receiving the road geometric parameter; or obtaining a data subset of the road geometry from a data set of the sensor through clustering, where the data subset of the road geometry includes at least one piece of data including information about a distance, an azimuth, and a radial velocity of the road geometry relative to the sensor, and determining the road geometric parameter based on the data subset of the road geometry. In this solution, the road geometric parameter can be obtained from a third-party device, or the data subset of the road geometry can be obtained from the data set of the sensor through clustering, to obtain the road geometric parameter; and then, the data subset of the first target that intersects the road geometry is obtained based on the road geometric parameter.

In a possible implementation, the determining the data subset of the first target based on the road geometric parameter includes: obtaining a data subset of at least one cluster from the data set of the sensor through clustering; determining a geometric parameter of at least one target based on the data subset of the at least one cluster; and determining the data subset of the first target based on the geometric parameter of the at least one target and the road geometric parameter, where the data subset of the first target is a data subset of a target that intersects the road geometry. In this solution, the data subset of the at least one cluster can be obtained from the data set of the sensor through clustering, and the data subset of the target is obtained from the data subset of the at least one cluster based on the road geometric parameter.

In a possible implementation, the geometric parameter of the target is a first polynomial parameter, the road geometric parameter is a second polynomial parameter, and the first polynomial parameter and the second polynomial parameter are used to determine a geometric relationship between the first target and the road geometry. The geometric parameter of the target and the road geometric parameter are obtained through clustering, so that the first target that intersects the road geometry is determined from one or more targets.

In a possible implementation, the processing unit is specifically configured to obtain height h of the first target relative to the sensor based on N pieces of data in the data subset of the first target and the following relational expression: $\dot{r}_i = \Lambda_i v + n_i$, where i = 1, 2, ... , N. $v$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where

$$\Lambda_{x,i} = (r_i^2 - h_i^2)^{\frac{1}{2}}\cos\theta_i/r_i, \quad \Lambda_{y,i} = (r_i^2 - h_i^2)^{\frac{1}{2}}\sin\theta_i/r_i$$

, $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error. The height information of the target relative to the sensor is obtained based on the at least one piece of data that is included in the data subset of the target and that includes the information about the distance, the azimuth, and the radial velocity of the target relative to the sensor, to prevent a false alarm caused when the target is directly used as an obstacle without considering the height information or the pitch angle information of the target. Therefore, safety or comfort problems such as unnecessary emergency braking or a rear-end collision caused by the false alarm are reduced.

In a possible implementation, the processing unit is specifically configured to obtain a pitch angle φ of the first target relative to the sensor based on N pieces of data in the data subset of the first target and the following relational expression: $\dot{r}_i = \Lambda_i v + n_i$, where i = 1, 2, ... , N. $v$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \tilde{\varphi}_i$, and $\tilde{\varphi}_i$ is a pitch angle error. The pitch angle information of the target relative to the sensor is obtained based on the at least one piece of data that is included in the data subset of the target and that includes the information about the distance, the azimuth, and the radial velocity of the target relative to the sensor, to prevent a false alarm caused when the target is directly used as an obstacle without considering the height information or the pitch angle information of the target. Therefore, safety or comfort problems such as unnecessary emergency braking or a rear-end collision caused by the false alarm are reduced.

In a possible implementation, the height information or the pitch angle information of the first target relative to the sensor is obtained based on a square error criterion and an SSD criterion. Relatively accurate height information or pitch angle information of the first target may be obtained by using a criterion of an LSE or an MMSE.

In a possible implementation, the first target is a static target. In this solution, a data subset corresponding to the static target can be obtained from the data set of the sensor, and height information or pitch angle information of the static target is obtained, to prevent unnecessary emergency braking caused by directly using the static target as an obstacle without considering the height information or the pitch angle information of the static target.

In a possible implementation, the processing unit is specifically configured to obtain the data subset of the first target from M pieces of data in the data set of the sensor, where the data subset of the first target meets the following relationship: $|\dot{r}_k + \Lambda_k \mathbf{v}_s| \le \dot{r}_{Th}$, where k = 1, 2, ... , M. $\mathbf{v}_s$ is a three-dimensional motion velocity vector of the sensor, $\dot{r}_k$ is a radial velocity in a $k^{th}$ piece of data in the data set of the sensor, $\Lambda_k$ is a direction cosine vector corresponding to $\dot{r}_k$, and $\dot{r}_{Th}$ is a predefined threshold. In this solution, a data subset corresponding to a static target can be selected from the data set of the sensor, and height information or pitch angle information of the static target is obtained, to prevent a false alarm caused when the static target is directly used as an obstacle without considering the height information or the pitch angle information of the static target.

According to a third aspect, a target detection apparatus is provided, and the apparatus includes: a memory, configured to store a computer program; a transceiver, configured to receive or send a radio signal; and a processor, configured to execute the computer program, to implement the method in any possible implementation of the first aspect.

According to a fourth aspect, a computer-readable storage medium is provided, and the computer-readable storage medium stores computer program code. When the computer program code is executed by a processor, the method in any possible implementation of the first aspect is implemented.

According to a fifth aspect, a chip system is provided. The chip system includes a processor and a memory, and the memory stores computer program code. When the computer program code is executed by the processor, the method in any possible implementation of the first aspect is implemented. The chip system may include a chip, or may include a chip and another discrete device.

According to a sixth aspect, a computer program product is provided, and when the computer program product runs on a computer, the method in any possible implementation of the first aspect is implemented.

## BRIEF DESCRIPTION OF DRAWINGS

FIG. 1 is a schematic diagram of two system architectures according to an embodiment of this application;

FIG. 2 is a schematic diagram of measured data according to an embodiment of this application;

FIG. 3 is a schematic diagram of a hardware structure of a target detection apparatus according to an embodiment of this application;

FIG. 4 is a schematic flowchart of a target detection method according to an embodiment of this application;

FIG. 5 is a schematic diagram of determining height information or pitch angle information of a first target according to an embodiment of this application;

FIG. 6 is an example diagram of four use scenarios of a target detection method according to an embodiment of this application;

FIG. 7 is an example diagram of height simulation evaluation of two targets according to an embodiment of this application;

FIG. 8 is a side view of a schematic diagram of determining height information or pitch angle information of a first target according to an embodiment of this application;

FIG. 9 is a block diagram of a structure of a target detection apparatus according to an embodiment of this application; and

FIG. 10 is a block diagram of a structure of another target detection apparatus according to an embodiment of this application.

## DESCRIPTION OF EMBODIMENTS

The following further describes specific embodiments of this application in detail with reference to accompanying drawings.

Embodiments of this application provide a target detection method and apparatus, to accurately obtain height information or pitch angle information of a target, especially a suspended object, so that false alarms are effectively reduced, and driving safety and comfort are improved.

For better understanding of embodiments of this application, a system architecture to which embodiments of this application can be applied is described below.

The system architecture to which embodiments of this application can be applied may include a target detection apparatus or module. The target detection apparatus or module is deployed on a sensor platform. A sensor is integrated on the sensor platform. The target detection apparatus or module is configured to: measure a surrounding target by using the sensor on the sensor platform, to obtain measured data of the surrounding target, and obtain height information or pitch angle information of the target based on the measured data of the surrounding target.

Alternatively, the system architecture to which embodiments of this application can be applied may include a target detection apparatus and a sensor platform. The sensor platform is independent of the target detection apparatus, and a sensor is configured on the sensor platform. The sensor platform is configured to measure a surrounding target by using the sensor, to obtain measured data of the surrounding target and transmit the measured data to the target detection apparatus or module. The target detection apparatus or module is configured to obtain height information or pitch angle information of the target based on the measured data that is of the surrounding target and that is obtained by the sensor platform. The sensor platform may communicate with the target detection apparatus or module in a communication manner such as a wireless network or a wired network.

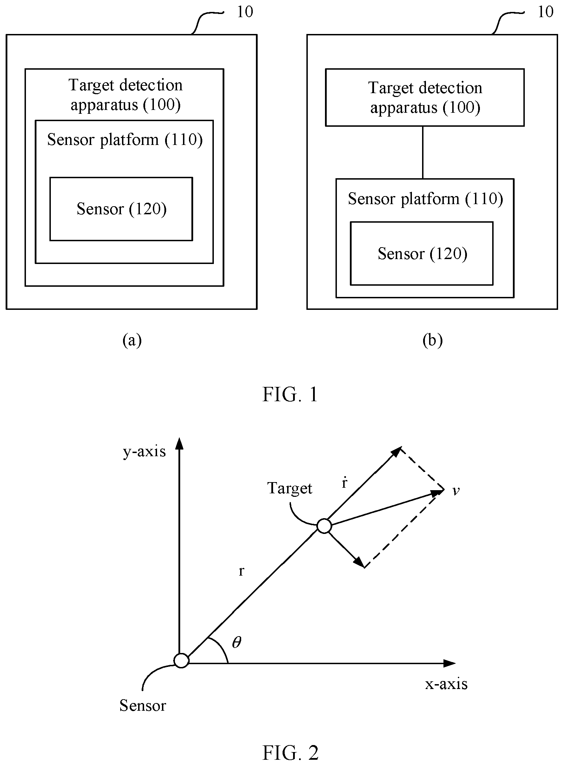

FIG. 1 is a schematic diagram of two system architectures according to an embodiment of this application. As shown in (a) in FIG. 1, a system architecture 10 includes a target detection apparatus or module 100. The target detection apparatus or module 100 is integrated on a sensor platform 110. A sensor 120 is configured on the sensor platform 110. As shown in (b) in FIG. 1, the system architecture 10 includes a target detection apparatus or module 100 and a sensor platform 110. The sensor platform 110 is deployed outside the target detection apparatus 100 and is independent of the target detection apparatus or module 100.

The sensor platform 110 shown in FIG. 1 may be a movable device. For example, the sensor platform may be a vehicle-mounted platform. For example, the sensor platform is disposed on an automobile, a motorcycle, or a bicycle. Alternatively, the sensor platform may be a ship-mounted platform. For example, the sensor platform is disposed on a ship, a steamer, or a motorboat. Alternatively, the sensor platform may be an aircraft-mounted platform. For example, the sensor platform is disposed on an unmanned aerial vehicle, a helicopter, a jet aircraft, or a balloon. Alternatively, the sensor platform may be a satellite-mounted platform. For example, the sensor platform is disposed on a satellite. Alternatively, the sensor platform may be an intelligent agent device. For example, the sensor platform is disposed on a robot disposed in various application scenarios, such as a household robot or an industrial scenario robot.

The sensor 120 shown in FIG. 1 may be a radar sensor, such as a millimeter wave radar or a laser radar. Alternatively, the sensor 120 may be a sonar or an ultrasonic sensor. Alternatively, the sensor 120 may be a visual sensor or an imaging sensor, such as a camera, a video camera, or an imaging radar (such as a synthetic-aperture radar). Alternatively, the sensor 120 may be a direction-finding sensor that has a frequency shift measurement capability. The direction-finding sensor may obtain radial velocity information by measuring frequency shift of a received signal relative to a known frequency. For specific descriptions of the radar sensor, the sonar, the ultrasonic sensor, the visual sensor, the imaging sensor, or the direction-finding sensor, refer to explanations and descriptions in a conventional technology. Details are not described in this application.

It should be further noted that, in this embodiment of this application, physical composition of the sensor may be one or more physical sensors. For example, each of the one or more physical sensors may separately measure information such as a distance, an azimuth, and a radial velocity, or may obtain information such as a distance, an azimuth, and a radial velocity based on measured data obtained by the one or more physical sensors through measurement. This is not limited herein.

In this embodiment of this application, the sensor may measure a surrounding target (such as a target that is static relative to a reference system, a target that is moving relative to the reference system, an obstacle, or a building) to obtain measured data of the surrounding target. A radar is used as an example. The measured data may include one or more of a distance r between a target shown in FIG. 2 and a sensor, an azimuth θ of the target relative to the sensor, and a radial velocity (also referred to as a "range rate") $\dot{r}$ and a scattering cross-sectional area of the target relative to the sensor. For example, in this embodiment of the present invention, an ambient environment is perceived in a process in which a vehicle, a ship, an aircraft, an unmanned aerial vehicle, a satellite, or an intelligent agent moves, to obtain height information or pitch angle information of a target in the ambient environment relative to the sensor or a sensor carrier, so that a false alarm is effectively avoided, accuracy of three-dimensional perception of the ambient environment can be effectively improved, and comfort and safety are improved. The sensor carrier may be the foregoing sensor platform. Alternatively, the sensor carrier may be a carrier of the foregoing sensor platform. For example, for a vehicle-mounted platform, the sensor carrier may be a vehicle such as an automobile, a motorcycle, or a bicycle. For a ship-mounted platform, the sensor carrier may be a ship, a steamer, a motorboat, or the like. For an aircraft-mounted platform, the sensor carrier may be an unmanned aerial vehicle, a helicopter, a jet aircraft, a balloon, or the like. For a satellite-mounted platform, the sensor carrier may be a satellite or the like. This is specifically determined based on a scenario and an actual situation, and is not limited in this application.

The foregoing method may be further applied to another three-dimensional (3 dimension, 3D) environment perception scenario. A specific application scenario is not limited in this embodiment of this application.

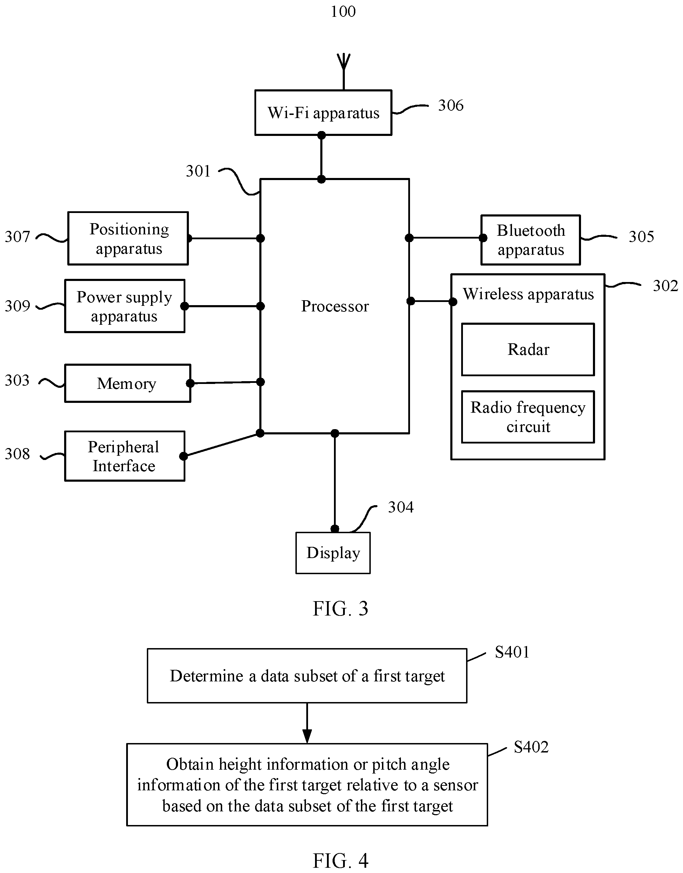

FIG. 3 is a schematic diagram of a hardware structure of a target detection apparatus according to an embodiment of this application. As shown in FIG. 3, a target detection apparatus or module 100 may include components such as a processor 301, a wireless apparatus 302, a memory 303, a display 304, a Bluetooth apparatus 305, a Wi-Fi apparatus 306, a positioning apparatus 307, a peripheral interface 308, and a power supply apparatus 309. These components may communicate with each other by using one or more communication buses or signal cables, such as a controller area network (controller area network, CAN) bus (not shown in FIG. 3). A person skilled in the art may understand that the hardware structure shown in FIG. 3 does not constitute a limitation on the target detection apparatus, and the target detection apparatus may include more or fewer components than those shown in the figure, combine some components, or have different component arrangements.

In some embodiments, for example, for the target detection apparatus or module 100 in the system architecture shown in (a) in FIG. 1, the wireless apparatus 302 may include but is not limited to the sensor platform 110 or the sensor 120. The wireless apparatus 302 is configured to measure a surrounding target to obtain measured data of the surrounding target. The measured data of the surrounding target includes information such as positions, azimuths, or radial velocities of a plurality of points of at least one surrounding target relative to the target detection apparatus or module 100 (or more specifically, relative to the sensor platform 110).

For example, the wireless apparatus 302 may include a radar. The target detection apparatus or module 100 may transmit a radar wave (or referred to as a radar detection signal) by using the radar, and receive a reflected wave obtained after a radar signal is reflected by the target, to detect information such as a position or a structure of the target. For example, the radar may be a laser radar, a millimeter wave radar, or the like.

In some other embodiments, the wireless apparatus 302 may further include a radio frequency circuit. The radio frequency circuit may be configured to receive and send a radio signal. For example, for the target detection apparatus or module 100 in the system architecture shown in (b) in FIG. 1, the radio frequency circuit may be configured to receive the measured data of the surrounding target from the sensor platform. The radio frequency circuit may include but is not limited to an antenna, at least one amplifier, a transceiver, a coupler, a low noise amplifier, a duplexer, and the like.

The memory 303 is configured to store a computer program, data, or the like.

The processor 301 may perform various functions and data processing by running the computer program stored in the memory 303. For example, information such as a position, an azimuth, or a radial velocity of at least one target relative to the target detection apparatus or module 100 (or more specifically, relative to the sensor platform 110) is obtained based on the measured data that is of the surrounding target and that is obtained by the sensor platform.

It should be understood that hardware modules included in the target detection apparatus or module 100 shown in FIG. 3 are merely example descriptions, and do not constitute a limitation on this application.

A target detection method provided in this application may be applied to a target detection apparatus having the structure in FIG. 3 or a similar structure, or may alternatively be applied to a target detection apparatus of another structure. This is not limited in this application.

A target detection method provided in an embodiment of this application is further specifically described below.

FIG. 4 is a schematic flowchart of a target detection method according to an embodiment of this application. The method may be performed by a sensor system, a fused perception system, or a planning/control system integrated with the foregoing system, such as an auxiliary driving system or an autonomous driving system. Alternatively, the method may be performed by software or hardware (for example, a target detection apparatus that is integrated with or connected to a corresponding sensor in a wired or wireless manner). The following different steps may be implemented in a centralized manner or in a distributed manner. As shown in FIG. 4, the target detection method includes the following steps S401 and 5402.

S401: Determine a data subset of a first target.

The data subset of the first target may include at least one piece of data. The data includes information about a distance, an azimuth, and a radial velocity of the first target relative to a sensor.

For example, the data subset of the first target may include N pieces of data (N is a positive integer). Each piece of data includes a combination of distance information, azimuth information, and radial velocity information.

Further, in some embodiments, the data subset of the first target may include information about distances, azimuths, and radial velocities of a plurality of points on the first target relative to the sensor. For example, the data subset of the first target may include N pieces of data (N is a positive integer). Each piece of data includes information about a distance, an azimuth, and a radial velocity of one point on the first target relative to the sensor.

S402: Obtain height information or pitch angle information of the first target relative to the sensor based on the data subset of the first target.

It may be understood that, in this application, the data subset of the first target is obtained, so that the height information or the pitch angle information of the first target relative to the sensor may be obtained based on information about a distance, an azimuth, and a radial velocity that is of the first target relative to the sensor and that is in the at least one piece of data in the data subset of the first target.

Specifically, the height information or the pitch angle information of the first target relative to the sensor may be obtained based on the at least one piece of data in the data subset of the first target and based on a relationship between the information about the distance, the azimuth, and the radial velocity of the target in the at least one piece of data and a velocity vector of the first target.

The velocity vector of the first target may be obtained based on external input. Alternatively, the velocity vector of the first target may be obtained based on a data set of the sensor. For example, the velocity vector of the first target is obtained based on ego-motion (ego-motion) estimation of the sensor. For example, the velocity vector of the first target is an opposite number of an ego-motion velocity vector of the sensor. For another example, the velocity vector of the first target is obtained based on the data set of the sensor by using a method such as random sample consensus (random sample consensus, RANSAC). Alternatively, the velocity vector of the first target may be obtained through joint estimation based on the data subset of the first target and the height information or the pitch angle information of the first target relative to the sensor

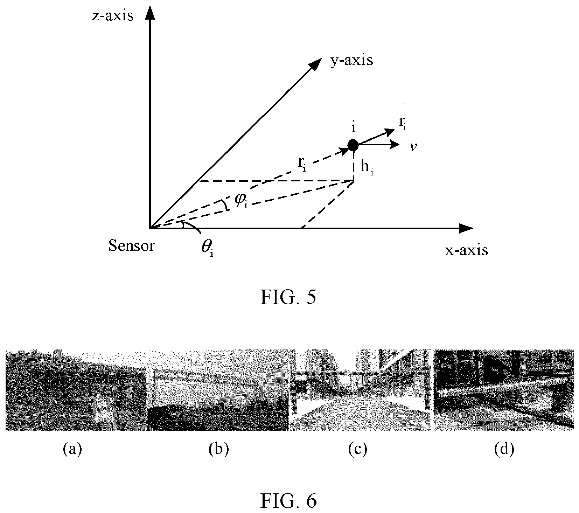

FIG. 5 is a schematic diagram of determining height or a pitch angle of the first target. As shown in FIG. 5, a point i is a position of an $i^{th}$ point that is on the first target and that is corresponding to an $i^{th}$ piece of data in the data subset of the first target. A distance between the $i^{th}$ point on the first target and the sensor is r; shown in FIG. 5. An azimuth of the $i^{th}$ point on the first target relative to the sensor is $\theta_i$ shown in FIG. 5. A radial velocity (also referred to as a "range rate") of the $i^{th}$ point on the first target relative to the sensor is $\dot{r}_i$ shown in FIG. 5. The radial velocity $\dot{r}_i$ is a projection component of a velocity vector $v$ of the $i^{th}$ point in a radial direction of the $i^{th}$ point. Radial velocity data included in data in the data subset of the first target may be a measured value or an estimate of a projection component of the velocity vector $v$ of the first target in the radial direction of the $i^{th}$ point. Therefore, the height or pitch angle information of the target may be obtained based on a projection component (that is, $\dot{r}_i$) of the velocity vector of the $i^{th}$ point on the $i^{th}$ point with reference to a relationship between the velocity vector of the first target and direction cosine (which is a function of a pitch angle or height) of a projection direction of the $i^{th}$ point. In the target detection method provided in this application, the height information or the pitch angle information of the first target relative to the sensor is obtained based on the obtained data subset of the first target. More specifically, the height information or the pitch angle information of the first target relative to the sensor is obtained based on the at least one piece of data that is included in the data subset of the first target and that includes the information about the distance, the azimuth, and the radial velocity of the first target relative to the sensor, such as at least one piece of data including information about distances, azimuths, and radial velocities of a plurality of points on the first target relative to the sensor, to prevent a false alarm caused when the target is directly used as an obstacle without considering the height information or the pitch angle information of the target, so that driving safety and comfort are improved.

The target detection method provided in this embodiment of this application may be used to detect a moving obstacle (such as a vehicle or a pedestrian), a static obstacle (such as a fence, a road edge, a lamp post, a tree, or a building), or a suspended object on a road. The suspended object may be a static suspended object, a suspended object relative to a sensor platform or a sensor carrier, or the like.

FIG. 6 is an example diagram of four use scenarios of a target detection method according to an embodiment of this application. FIG. 6 shows four static suspended object scenarios to which the target detection method is applicable. (a) in FIG. 6 is a flyover culvert scenario, and a flyover culvert is a static suspended object, (b) in FIG. 6 is a gantry scenario, and a gantry is a static suspended object. (c) in FIG. 6 is a height limit pole scenario, and a height limit pole is a static suspended object, (d) in FIG. 6 is a parking gate (also referred to as a parking barrier) scenario, and a parking gate (also referred to as a parking barrier) is a static suspended object.

In this embodiment of this application, the first target may intersect road geometry.

The road geometry includes a road boundary, a lane line, and the like. For example, the road boundary may include but is not limited to a fence, a roadside stone, a road edge, or a road greenbelt. The lane line may include but is not limited to double yellow lines, a single yellow line, a solid white line, a dashed white line, a dashed-solid line, a guide line, or the like.

In this application, intersection with the road geometry may be contact-type intersection with the road geometry, intersection with an extended line of the road geometry, or being perpendicular or approximately perpendicular to a curve or planar space in which the road geometry is located. For example, the flyover culvert shown in (a) in FIG. 6, the gantry shown in (b) in FIG. 6, the height limit pole shown in (c) in FIG. 6, and the parking gate (also referred to as a parking barrier) shown in (d) in FIG. 6 are perpendicular to the curve or the planar space in which the road geometry is located, and can be used as the first target. It may be understood that the target that is perpendicular to the curve or the planar space in which the road geometry is located may be understood as a potential obstacle when a system such as ADAS or AD is applied to a 3D environment perception scenario. Specifically, if height of the target is less than or equal to that of the sensor platform or the sensor carrier, passing of the sensor carrier is affected, and the target is an actual obstacle. If the height of the target is greater than that of the sensor platform or the sensor carrier, the target is not an obstacle for the sensor carrier. Therefore, the target that is perpendicular to the curve or the planar space in which the road geometry is located may be used as the first target in this embodiment of this application. Whether the target is an actual obstacle is further determined by using the target detection method provided in this embodiment of this application.

Specifically, whether the first target intersects the road geometry may be determined based on a geometric parameter of the first target or the data subset of the first target and a geometric parameter of the road geometry. For example, if a geometric curve used to represent the first target intersects a geometric curve of the road geometry, and an included angle of an intersection point of the curves is greater than a predefined included angle threshold, it may be determined that the first target intersects the road geometry. For example, the predefined included angle threshold is 45°, 60°, 75°, or 80°, and may be specifically set based on a specific scenario.

Alternatively, whether the first target intersects the road geometry may be determined based on a position relationship between the data subset of the first target and the road geometry. For example, if the data subset of the first target is located between two road boundaries or between a road boundary and a lane line, or further, a sum of projection lengths of the data subset of the first target in a normal direction of the road geometry is far greater than a sum of projection lengths in a tangential direction of the road geometry, it may be determined that the first target intersects the road geometry.

In a possible implementation, step S401 (that is, determining a data subset of a first target) may include: obtaining a road geometric parameter; and determining the data subset of the first target based on the road geometric parameter.

The road geometric parameter is used to represent at least information such as a geometric position and a geometric structure of a road or a road feature. For example, the road geometric parameter may be represented by a linear polynomial parameter (such as a straight line), a quadratic polynomial parameter (such as a parabola), or a cubic polynomial parameter (such as a clothoid (clothoid)).

For example, the determining the data subset of the first target based on the road geometric parameter may specifically include: obtaining a data subset of at least one cluster from the data set of the sensor through clustering; determining a geometric parameter of at least one target based on the obtained data subset of the at least one cluster; and determining the data subset of the first target based on the geometric parameter of the at least one target and the road geometric parameter. The data subset of the first target is a data subset corresponding to a target that intersects the road geometry.

The data set of the sensor includes M pieces of data (M is a positive integer) obtained by the sensor through measurement. Each piece of data includes a combination of distance information, azimuth information, and radial velocity information.

The geometric parameter of the target is used to represent at least information such as a geometric position and a geometric structure of the target. For example, the geometric parameter of the target may be represented by a polynomial parameter (such as a first polynomial parameter), such as a linear polynomial parameter (such as a straight line), a quadratic polynomial parameter (such as a parabola), or a cubic polynomial parameter (such as a clothoid (clothoid) parameter). For example, the geometric parameter of the target may be represented by using a cubic polynomial parameter or a linear polynomial parameter such as a straight line. The first polynomial parameter and a second polynomial parameter are used to determine a geometric relationship between the first target and the road geometry. The data subset of the first target is determined based on the determined geometric parameter of the at least one target and the road geometric parameter. The data subset of the first target is a data subset of the first target that intersects the road geometry.

Specifically, the geometric parameter of the target or the geometric parameter of the road geometry may be obtained by performing parameter estimation or fitting on a used polynomial parameter based on the data subset of the target. For example, the geometric parameter of the target or the geometric parameter of the road geometry is obtained based on a least square (least square) method or an MMSE method. For another example, the geometric parameter of the target or the geometric parameter of the road geometry is obtained based on data in the data set by using Hough transform (hough transformation) or a RANSAC algorithm. Through Hough transform, a data point corresponding to the target may be transformed into parameter space, to implement fitting of a straight line and a curve. A basic idea of the RANSC algorithm is to remove a possible abnormal sample in the data set and retain valid sample data, to obtain a parameter consistent with a polynomial model.

It should be noted that, in this application, the data subset of the first target can be determined through a distributed or centralized means.

For example, for the system architecture shown in (a) in FIG. 1, the data subset of the first target may be determined through an integrated means. Specifically, the target detection apparatus or module 100 may measure a surrounding target by using the sensor on the sensor platform to obtain measured data (that is, the data set of the sensor) of the surrounding target, and obtain the road geometric parameter based on the data set of the sensor, and further determine the data subset of the first target based on the road geometric parameter. In this case, the obtaining the road geometric parameter may specifically include: obtaining a data subset of the road geometry from the data set of the sensor through clustering; and determining the road geometric parameter based on the obtained data subset of the road geometry, where the data subset of the road geometry includes at least one piece of data, and the data includes information about a distance, an azimuth, and a radial velocity of the road geometry relative to the sensor. For example, the data subset of the road geometry includes information about distances, azimuths, and radial velocities of a plurality of points on a road relative to the sensor

For the system architecture shown in (b) in FIG. 1, the data subset of the first target may be determined through a distributed means. Specifically, the sensor platform 110 may obtain the road geometric parameter based on the data set of the sensor, and the target detection apparatus or module 100 determines the data subset of the first target based on the road geometric parameter. In this case, the obtaining the road geometric parameter may specifically include: receiving the road geometric parameter from the sensor platform 110.

Alternatively, the sensor platform 110 may obtain the road geometric parameter and the data subset of the at least one cluster based on the data set of the sensor, and the target detection apparatus or module 100 determines the data subset of the first target based on the road geometric parameter and the data subset of the at least one cluster. Alternatively, the sensor platform 110 may obtain the road geometric parameter and the data subset of the at least one cluster based on the data set of the sensor, and determine a geometric parameter of at least one target based on the data subset of the at least one cluster, and the target detection apparatus or module 100 determines the data subset of the first target based on the road geometric parameter and the geometric parameter of the at least one target. Work of different apparatuses in the distributed means is not limited in this application.

In this application, a purpose of clustering is to determine, from the data set of the sensor, data subsets corresponding to targets of different categories. For example, the data subset of the road geometry and the data subset of the first target are determined from the data set of the sensor.

For example, the foregoing clustering algorithm may be a density-based clustering method, such as a density-based spatial clustering of applications with noise (density-based spatial clustering of applications with noise, DBSCAN) method or an extension thereof, such as hierarchical DBSCAN (hierarchical DBSCAN, HDBSCAN), or ordering points to identify the clustering structure (ordering points to identify the clustering structure, OPTICS). It may be understood that, by using a clustering method such as DBSCAN, HDBSCAN, or OPTICS, different targets or data subsets of different targets may be separated from the data set of the sensor, for example, the data subset of the road geometry and a data subset of an object (that is, the first target of the target detection apparatus or module 100 in this application) that intersects the road geometry. Therefore, data subsets corresponding to different categories may also be determined from the data set of the sensor, for example, the data subset of the road geometry and the data subset of the first target. For specific descriptions of the clustering method such as DBSCAN, HDBSCAN, or OPTICS, refer to explanations and descriptions in a conventional technology. Details are not described herein.

In step S402, the obtaining height information of the first target relative to the sensor based on the data subset of the first target may specifically include:

obtaining height h of the first target relative to the sensor based on N pieces of data in the data subset of the first target and the following relational expression:

$$\dot{r}_i = \Lambda_i \boldsymbol{v} + n_i,$$

where i = 1, 2, ..., N.

$\boldsymbol{v}$ is a three-dimensional motion velocity vector of the first target relative to the sensor, $\dot{r}_i$ is a radial velocity in an ith piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = (r_i^2 - h_i^2)^{\frac{1}{2}}\cos\theta_i / r_i$, $\Lambda_{y,i} = (r_i^2 - h_i^2)^{\frac{1}{2}}\sin\theta_i / r_i$, $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error.

For example, the first target is a gantry. In the foregoing relational expression, $\boldsymbol{v}$ is a three-dimensional motion velocity vector of the gantry relative to the sensor, and $v = [v_x, v_y, v_z]^T$. $v_x$ is a motion velocity component of the gantry in an x-axis direction, $v_y$ is a motion velocity component of the gantry in a y-axis direction, and $v_z$ is a motion velocity component of the gantry in a z-axis direction.

For another example, the velocity vector of the first target is obtained based on the data set of the sensor by using a method such as random sample consensus (random sample consensus, RANSAC). Alternatively, the velocity vector of the first target may be obtained through joint estimation based on the data subset of the first target and the height information or the pitch angle information of the first target relative to the sensor.

Specifically, the three-dimensional motion velocity vector of the first target relative to the sensor may be obtained based on ego-motion estimation of the sensor. For example, the three-dimensional motion velocity vector of the first target relative to the sensor is an opposite number of an ego-motion velocity vector of the sensor. In addition, the three-dimensional motion velocity vector of the first target relative to the sensor or the ego-motion velocity vector of the sensor may be obtained from the data set of the sensor by using a RANSAC method or a Hough transform method. Alternatively, as described below, the three-dimensional motion velocity vector of the first target relative to the sensor may be obtained

EP 4 141 483 A1

through joint estimation based on the data subset of the first target and the height or the pitch angle of the target relative to the sensor

In an implementation, height values $h_1, .. , h_i, ..., $ and $h_N$ corresponding to each piece of data may be further obtained based on the foregoing relational expression and the N pieces of data in the data subset of the first target, to obtain the height h of the first target relative to the sensor h $=\min(h_1, ..., h_i, ..., h_N)$, or h$=(h_1+...+h_i+...+h_N)/N$. This is not limited in this application.

The x-axis, the y-axis, and the z-axis may be three mutually perpendicular coordinate axes of a sensor coordinate system. In this application, height of the first target relative to a carrier (such as a vehicle body) coordinate system in which the sensor is located may be obtained by using an external parameter of the sensor relative to the carrier (such as a vehicle body) coordinate system, including rotation R and translation T. Specifically, a position vector of the first target in the sensor coordinate system is $\mathbf{X_s}=[x_s, y_s, z_s]$, and $z_s$ is usually height of the first target relative to the sensor coordinate system. A position vector of the first target in the carrier (such as a vehicle body) coordinate system is $\mathbf{X_e}=R\mathbf{X_s}+T$. $\mathbf{X_e}=[x_e, y_e, z_e]$, and z, is usually the height of the first target relative to the carrier (such as a vehicle body) coordinate system.

After the height h of the first target relative to the sensor coordinate system or the carrier coordinate system is obtained, the target detection method provided in this embodiment of this application may further include: determining, based on the height h of the first target relative to the sensor coordinate system or the carrier coordinate system, whether the first target is an obstacle.

For example, whether the first target is an obstacle may be determined by determining a relationship between the height h of the first target relative to the sensor coordinate system or the carrier coordinate system and a preset value h'. For example, if the height h of the first target relative to the sensor is less than (or less than or equal to) the preset value h', it is determined that the first target is an obstacle; and if the height h of the first target relative to the sensor is greater than (or greater than or equal to) the preset value h', it is determined that the first target is a suspended object but not an obstacle.

In step S402, the obtaining pitch angle information of the first target relative to the sensor based on the data subset of the first target may specifically include:

obtaining a pitch angle $\varphi$ of the first target relative to the sensor based on N pieces of data in the data subset of the first target and the following relational expression:

$$\dot{r}_i = \Lambda_i \boldsymbol{v} + n_i,$$

where i = 1, 2, ..., N.

$\boldsymbol{v}$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \dot{\varphi}_i$, and $\dot{\varphi}_i$ is a pitch angle error.

In an implementation, pitch angles $\varphi_1, ..., \varphi_i, ...,$ and $\varphi_N$ corresponding to each piece of data may be further obtained based on the following relational expression and the N pieces of data in the data subset of the first target, to obtain the pitch angle $\varphi$ of the first target relative to the sensor. $\varphi=\min(\varphi_1, ..., \varphi_i, ..., \varphi_N)$, or $\varphi=\varphi_1+...+\varphi_i+...+\varphi_N)/N$. This is not limited in this application.

After the pitch angle $\varphi$ of the first target relative to the sensor is obtained, the target detection method provided in this embodiment of this application may further include: determining, based on the pitch angle $\varphi$ of the first target relative to the sensor, whether the first target is an obstacle.

For example, whether the first target is an obstacle may be determined by determining a relationship between the pitch angle $\varphi$ of the first target relative to the sensor and a preset value $\varphi'$. For example, if the pitch angle $\varphi$ of the first target relative to the sensor is less than (or less than or equal to) the preset value $\varphi'$, it is determined that the first target is an obstacle; and if the pitch angle $\varphi$ of the first target relative to the sensor is greater than (or greater than or equal to) the preset value $\varphi'$, it is determined that the first target is a suspended object but not an obstacle.

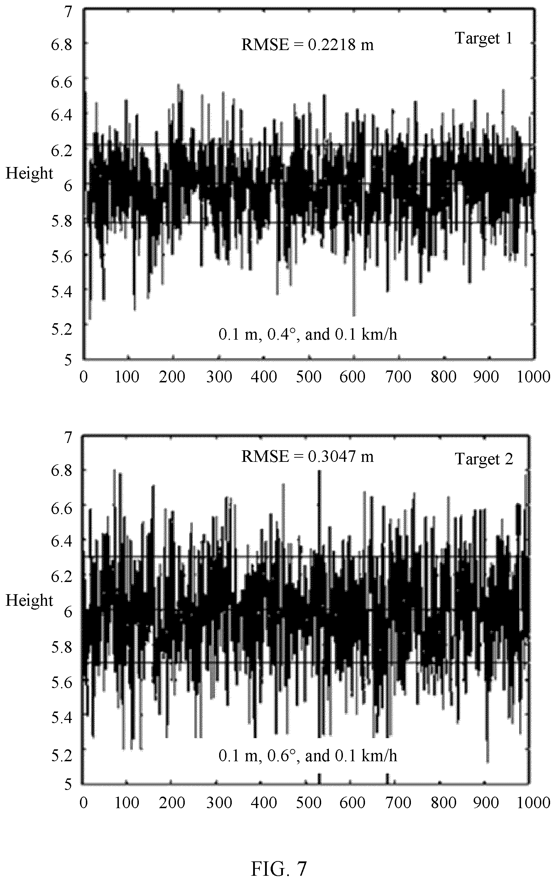

Based on the target detection method provided in this embodiment of the present invention, accuracy and reliability of obstacle detection can be improved. For example, FIG. 7 is target height emulation evaluation diagrams obtained by measuring two targets with a same distance, a same radial velocity, and different azimuths relative to the sensor by using the target detection method provided in this embodiment of this application. As shown in FIG. 7, a distance between a target 1 and the sensor is 0.1 m, a radial velocity is 0.1 km/h, and an azimuth is 0.4°. A root mean square error (root mean square error, RMSE) of height that is of the target 1 and that is obtained through measurement by using the target detection method provided in this embodiment of this application is 0.2218 m. A distance between a target 2 and the sensor is 0.1 m, a radial velocity is 0.1 km/h, and an azimuth is 0.6°. An RMSE of height that is of the target 2 and that is obtained through measurement by using the target detection method provided in this embodiment of this application is 0.3047 m. It may be learned that, in the target detection method provided in this embodiment of this application, the height information or the pitch angle information of the target may be accurately obtained with a small error, so that accuracy and reliability of obstacle identification are improved.

In some embodiments, the height information or the pitch angle information of the first target relative to the sensor may alternatively be obtained based on a sum of squared differences (sum of squared difference, SSD) criterion, a least square method, or a minimum mean square error MMSE criterion.

For example, the height information or the pitch angle information of the first target relative to the sensor may be obtained based on the SSD criterion or the least square method by using a Gaussian-Newton method, a brute-Force search algorithm, or an SSD criterion that is based on limited value classification.

For example, the height information or the pitch angle information of the first target relative to the sensor may be obtained based on the following relational expression:

$$\hat{h} = \min_h \sum_i (\dot{r}_i - \Lambda_i v)^2.$$

$\Lambda_i = [\Lambda_{x,i}, \Lambda_{y,i}, \Lambda_{z,i}]$, $\Lambda_{x,i} = (r_i^2 - h_i^2)^{\frac{1}{2}} \cos\theta_i / r_i$, $\Lambda_{y,i} = (r_i^2 - h_i^2)^{\frac{1}{2}} \sin\theta_i / r_i$, and $\Lambda_{z,i} = h/r_i$, where $\theta_i$ is an azimuth corresponding to $\dot{r}_i$, $h_i$ is height corresponding to $\dot{r}_i$, and $h_i = h + \tilde{h}_i$.

For example, $v$ is obtained based on ego-motion estimation of the sensor, and the height of the target is obtained based on the data subset of the first target by using a Gaussian-Newton (Gaussian-Newton) method. Obtaining the height of the first target relative to the sensor may specifically include the following step 1 and step 2.

Step 1: Obtain an initial estimate $h_0$ of the height of the first target.

For example, an initial estimate $h_k$=0 or is equal to height of the carrier (such as a vehicle body), such as 0.5 m, 0.7 m, or 1.5 m. This is specifically determined based on a scenario or an application.

Step 2: Obtain a height estimate $h_{k+1}$ of the first target based on data in the data subset of the first target and a height estimate $h_k$. A specific relational expression is as follows:

$$h_{k+1} = \frac{\sum_{i=1}^{i=N_T} [\dot{r}_i - f_i(h_k) + J_i(h_k) \cdot h_k]}{\sum_{i=1}^{i=N_T} J_i(h_k)},$$

where
i=1, ..., $N_T$, and represents an index or a sequence number of the data in the data subset of the first target. $f_i(h_k)$ is a value of $f_i(h) = \Lambda_i v$ when $h=h_k$, and $f_i(h_k)$ may be specifically represented as follows:

$$f_i(h_k) = v_x \cdot (r_i^2 - h_k^2)^{\frac{1}{2}} \cos\theta_i / r_i + v_y \cdot (r_i^2 - h_k^2)^{\frac{1}{2}} \sin\theta_i / r_i + v_z \cdot h_k / r_i.$$

$J_i(h)$ is a value of a first-order derivative of $f_i(h) = \Lambda_i v$ relative to h when $h=h_k$, and $J_i(h)$ may be specifically represented as follows:

$$J_i(h_k) = -\frac{(v_x \cdot \cos\theta_i + v_y \cdot \sin\theta_i) \cdot h_k}{(r_i^2 - h_k^2)^{\frac{1}{2}} \cdot r_i} + \frac{v_z}{r_i}.$$

In the foregoing relational expression, $h_{k+1}$ may be obtained based on $h_k$, and further, $h_{k+2}$ is obtained based on $h_{k+1}$. Similarly, $h_N$ is obtained after the foregoing step is repeated N times or until a difference between two adjacent estimates $h_N$ and $h_{N-1}$ of h is less than a predetermined threshold. Finally obtained $h_N$ is used as an estimate of the height of the first target.

It should be noted that all or different partial subsets of the data subset of the first target may be used in different iterative processes of step 2.

For example, $v$ is obtained based on ego-motion estimation of the sensor, and the pitch angle of the first target is obtained based on the data subset of the first target by using a Gaussian-Newton (Gaussian-Newton) method. Obtaining the pitch angle of the first target relative to the sensor may specifically include the following step A and step B.

Step A: Obtain an initial estimate $\varphi_0$ of the pitch angle of the first target.

For example, the initial estimate $\varphi_0$=0 or is equal to a pitch angle of the carrier (such as a vehicle body), such as 0.5 m, 0.7 m, or 1.5 m. This is specifically determined based on a scenario or an application.

Step B: Obtain a pitch angle estimate $\varphi_{k+1}$ of the target based on data in the data subset of the first target and a pitch angle estimate $\varphi_k$ of the target. A specific relational expression is as follows:

$$\varphi_{k+1} = \frac{\sum_{i=1}^{i=N_T}[\dot{r}_i - f_i(\varphi_k) + J_i(\varphi_k) \cdot \varphi_k]}{\sum_{i=1}^{i=N_T} J_i(\varphi_k)},$$

where

i=1, ..., $N_T$, and represents an index or a sequence number of the data in the data subset of the first target. $f_i(\varphi_k)$ is a value of $f_i(\varphi) = \Lambda_i v$ when $\varphi = \varphi_k$, and $f_i(\varphi_k)$ may be specifically represented as follows:

$$f_i(\varphi_k) = v_x \cdot \cos\varphi_k \cos\theta_i + v_y \cdot \cos\varphi_k \sin\theta_i + v_z \cdot \sin\varphi_k.$$

$J_i(\varphi_k)$ is a value of a first-order derivative of $f_i(\varphi) = \Lambda_i v$ relative to <p when $\varphi = \varphi_k$, and $J_i(\varphi_k)$ may be specifically represented as follows:

$$J_i(\varphi_k) = -v_x \cdot \sin\varphi_k \cos\theta_i - v_y \cdot \sin\varphi_k \sin\theta_i + v_z \cdot \cos\varphi_k.$$

In the foregoing relational expression, $\varphi_{k+1}$ may be obtained based on $\varphi_k$, and further, $\varphi_{k+2}$ is obtained based on $\varphi_{k+1}$. Similarly, $\varphi_N$ is obtained after the foregoing step is repeated N times or until a difference between two adjacent estimates $\varphi_N$ and $\varphi_{N-1}$ of <p is less than a predetermined threshold. Finally obtained $\varphi_N$ is used as an estimate of the pitch angle of the first target.

It should be noted that all or different partial subsets of the data subset of the first target may be used in different iterative processes of step B.

In some embodiments, a joint estimate of the velocity and the height or the pitch angle of the first target relative to the sensor may be further obtained based on the data subset of the first target.

For example, the joint estimate of the velocity and the height or the pitch angle of the first target relative to the sensor may be obtained based on the SSD criterion or the least square method by using a Gaussian-Newton method, a brute-Force search algorithm, or an SSD criterion that is based on limited value classification.

For example, the information about the velocity $\hat{v}$ and the height $\hat{h}$ of the first target relative to the sensor may be obtained based on the following relational expression:

$$\hat{v}, \hat{h} = \min_{v,h} \sum_i (\dot{r}_i - \Lambda_i v)^2.$$

$\Lambda_i = [\Lambda_{x,i}, \Lambda_{y,i}, \Lambda_{z,i}]$, $\Lambda_{x,i} = (r_i^2 - h^2)^{\frac{1}{2}}\cos\theta_i / r_i$, $\Lambda_{y,i} = (r_i^2 - h^2)^{\frac{1}{2}}\sin\theta_i / r_i$, and $\Lambda_{z,i} = h/r_i$. $\theta_i$ is an azimuth corresponding to $\dot{r}_i$.

For example, the velocity $\hat{v}$ and the height $\hat{h}$ of the target are obtained based on the data subset of the first target by using the Gaussian-Newton (Gaussian-Newton) method. The following steps a, b, and c may be specifically included.

Step a: Obtain an initial velocity value $v_0$ and an initial height estimate $h_0$ of the first target.

For example, the initial velocity estimate $v_0$ may be specifically set based on a scenario or an application, for example, may be set to an opposite number of a velocity of the carrier such as a vehicle, for example, $v_0 = [\dot{x}_0, \dot{y}_0, \dot{z}_0]^T$. $\dot{x}_0, \dot{y}_0$, and $\dot{z}_0$ are initial values of three velocity components. A vehicle is used as an example. For example, $v_0$ may be obtained based on an opposite number of a vehicle velocity. The vehicle velocity may be obtained from a speedometer, an inertial measurement unit (inertial measurement unit, IMU)/a global positioning system (global positioning system, GPS), or the like. In addition, $\dot{x}_0$ is an opposite number of a longitudinal vehicle velocity. For example, in a range [-200, 200] km/h, $\dot{y}_0 = \dot{z}_0 = 0$ may be set. The initial height estimate $h_0 = 0$ or is equal to height of the carrier (such as a vehicle body), such as 0.5 m, 0.7 m, or 1.5 m. This is specifically determined based on a scenario or an application.

Step b: Obtain a height estimate $h_{k+1}$ of the first target based on data in the data subset of the first target and a velocity estimate $v_k$ and a height estimate $h_k$ of the first target. A specific relational expression is as follows:

$$h_{k+1} = \frac{\sum_{i=1}^{i=N_T}[\dot{r}_i - f_i(h_k, v_k) + J_i(h_k, v_k) \cdot h_k]}{\sum_{i=1}^{i=N_T} J_i(h_k, v_k)},$$

where

i=1, ..., $N_T$, and represents an index or a sequence number of the data in the data subset of the first target. $f_i(h_k, v_k)$ is a value of $f_i(h, v) = \Lambda_i v$ when $h = h_k$ and $v = v_k$, and $f_i(h_k, v_k)$ may be specifically represented as follows:

$$f_i(h_k, \boldsymbol{v}_k) = v_x(k) \cdot (r_i^2 - h_k^2)^{\frac{1}{2}}\cos\theta_i/r_i + v_y(k) \cdot (r_i^2 - h_k^2)^{\frac{1}{2}}\sin\theta_i/r_i + v_z(k) \cdot h_k/r_i.$$

$J_i(h_k, v_k)$ is a value of a first-order derivative of $f_i(h, v) = \Lambda_i v$ relative to h when $h = h_k$ and $v = v_k$, and $J_i(h_k, v_k)$ may be specifically represented as follows:

$$J_i(h_k, \boldsymbol{v}_k) = -\frac{(v_x(k) \cdot \cos\theta_i + v_y(k) \cdot \sin\theta_i) \cdot h_k}{(r_i^2 - h_k^2)^{\frac{1}{2}} \cdot r_i} + \frac{v_z(k)}{r_i}.$$

Step c: Obtain a velocity estimate $v_{k+1}$ of the first target based on the data in the data subset of the first target and the height estimate $h_{k+1}$ of the first target. A specific relational expression is as follows:

$$\boldsymbol{v}_{k+1} = [\boldsymbol{\Lambda}^T(h_{k+1})\boldsymbol{\Lambda}(h_{k+1})]^{-1}\boldsymbol{\Lambda}^T(h_{k+1})\dot{\mathbf{r}},$$

where i=1, ..., $N_T$, and represents an index or a sequence number of the data in the data subset of the first target. $\Lambda(h_{k+1})$ and $\dot{\mathbf{r}}$ may be respectively represented as follows:

$$\Lambda(h_{k+1}) = \begin{bmatrix} \Lambda_1(h_{k+1}) \\ \vdots \\ \Lambda_{N_T}(h_{k+1}) \end{bmatrix}, \text{ and } \dot{\mathbf{r}} = \begin{bmatrix} \dot{r}_1 \\ \vdots \\ \dot{r}_{N_T} \end{bmatrix}.$$

$\Lambda_i(h_{k+1}) = [\Lambda_{x,i}(h_{k+1}), \Lambda_{y,i}(h_{k+1}), \Lambda_{z,i(hk+1)}]$, $\Lambda_{x,i} = (r_i^2 - h_{k+1}^2)^{\frac{1}{2}}\cos\theta_i/r_i$ , $\Lambda_{y,i} = (r_i^2 - h_{k+1}^2)^{\frac{1}{2}}\sin\theta_i/r_i$ , and $\Lambda_{z,i} = h_{k+1}/r_i$.

Alternatively, the foregoing step b may be replaced with the following: Obtain a height estimate $h_{k+1}$ of the first target based on data in the data subset of the first target and a height estimate $h_k$ and a velocity estimate $v_{k+1}$ of the first target. A specific relational expression is as follows:

$$h_{k+1} = \frac{\sum_{i=1}^{i=N_T}[\dot{r}_i - f_i(h_k, v_{k+1}) + J_i(h_k, v_{k+1}) \cdot h_k]}{\sum_{i=1}^{i=N_T} J_i(h_k, v_{k+1})},$$

where i=1, ..., $N_T$, and represents an index or a sequence number of the data in the data subset of the first target. $f_i(h_k, v_{k+1})$ is a value of $f_i(h, v) = \Lambda_i v$ when $h = h_k$ and $v = v_{k+1}$, and $f_i(h_k, v_{k+1})$ may be specifically represented as follows:

$$f_i(h_k, \boldsymbol{v}_{k+1}) = v_x(k+1) \cdot (r_i^2 - h_k^2)^{\frac{1}{2}}\cos\theta_i/r_i + v_y(k+1) \cdot (r_i^2 - h_k^2)^{\frac{1}{2}}\sin\theta_i/r_i + v_z(k+1) \cdot h_k/r_i.$$

$J_i(h_k, v_{k+1})$ is a value of a first-order derivative of $f_i(h, v) = \Lambda_i v$ relative to h when $h = h_k$ and $v = v_{k+1}$, and $J_i(h_k, v_{k+1})$ may be specifically represented as follows:

$$J_i(h_k, \boldsymbol{v}_{k+1}) = -\frac{(v_x(k+1) \cdot \cos\theta_i + v_y(k+1) \cdot \sin\theta_i) \cdot h_k}{(r_i^2 - h_k^2)^{\frac{1}{2}} \cdot r_i} + \frac{v_z(k+1)}{r_i}.$$

Alternatively, the foregoing step c may be replaced with the following: Obtain a velocity estimate $v_{k+1}$ of the first target based on the data in the data subset of the first target and the height estimate $h_k$ of the first target. A specific relational expression is as follows:

$$\boldsymbol{v}_{k+1} = [\Lambda^T(h_k)\Lambda(h_k)]^{-1}\Lambda^T(h_k)\dot{\mathbf{r}},$$

where

i=1, ..., $N_T$, and represents an index or a sequence number of the data in the data subset of the first target. $\Lambda(\boldsymbol{h_k})$ and $\dot{\mathbf{r}}$ may be respectively represented as follows:

$$\Lambda(h_k) = \begin{bmatrix} \Lambda_1(h_k) \\ \vdots \\ \Lambda_{N_T}(h_k) \end{bmatrix}, \text{ and } \dot{\mathbf{r}} = \begin{bmatrix} \dot{\mathbf{r}}_1 \\ \vdots \\ \dot{\mathbf{r}}_{N_T} \end{bmatrix}.$$

$\Lambda_i(h_k) = [\Lambda_{x,i}(h_k), \Lambda_{y,i}(h_k), \Lambda_{z,i(hk)}]$, $\Lambda_{x,i}(h_k) = (\mathrm{r}_i^2 - \mathrm{h}_k^2)^{\frac{1}{2}}\cos\theta_i/\mathrm{r}_i$, $\Lambda_{y,i}(h_k) = (\mathrm{r}_i^2 - \mathrm{h}_k^2)^{\frac{1}{2}}\sin\theta_i/\mathrm{r}_i$, and $\Lambda_{z,i}(h_k) = h_k/\mathrm{r}_i$.

In the foregoing relational expression, $h_{k+1}$ and $v_{k+1}$ may be respectively obtained based on $h_k$ and $v_k$, and further, $h_{k+2}$ and $v_{k+2}$ are respectively obtained based on $h_{k+1}$ and $v_{k+1}$. Similarly, $h_N$ and $v_N$ are obtained after the foregoing steps are repeated N times or until a distance between two adjacent estimates $h_N$, $v_N$ and $h_{N11}$, $v_{N-1}$ of hand $v$ is less than a predetermined threshold. Finally obtained $h_N$ and $v_N$ are used as estimates of the height and the velocity of the first target.

It should be noted that all or different partial subsets of the data subset of the first target may be used in different iterative processes or different steps of step b or step c.

For example, the information about the velocity $\hat{v}$ and the pitch angle $\hat{\varphi}$ of the first target relative to the sensor may be obtained based on the following relational expression:

$$\hat{v}, \hat{\varphi} = min_{v,\varphi} \sum_i (\dot{r}_i - \Lambda_i \boldsymbol{v})^2.$$

$\Lambda_i = [\Lambda_{x,i}, \Lambda_{y,i}, \Lambda_{z,i}]$, $\Lambda_{x,i} = \cos\varphi\cos\theta_i$, $\Lambda_{y,i} = \cos\varphi\sin\theta_i$, and $\Lambda_{z,i} = \sin\varphi$. $\theta_i$ is an azimuth corresponding to $\dot{\mathrm{r}}_i$.

For example, the velocity $\hat{v}$ and the pitch angle $\hat{\varphi}$ of the target are obtained based on the data subset of the first target by using the Gaussian-Newton (Gaussian-Newton) method. The following steps 1, 2, and 3 may be specifically included.

Step 1: Obtain an initial velocity value $v_0$ and an initial pitch angle estimate $\varphi_0$ of the first target.

For example, the initial velocity estimate $v_0$ may be specifically set based on a scenario or an application, for example, may be set to an opposite number of a velocity of the carrier such as a vehicle, for example, $v_0 = [\dot{x}_0, \dot{y}_0, \dot{z}_0]^T$. $\dot{x}_0, \dot{y}_0$, and $\dot{z}_0$ are initial values of three velocity components. A vehicle is used as an example. $v_0$ may be usually obtained based on an opposite number of a vehicle velocity. The vehicle velocity may be obtained from a speedometer, an IMU/GPS, or the like. In addition, $\dot{x}_0$ is an opposite number of a longitudinal vehicle velocity. For example, in a range [-200, 200] km/h, $\dot{y}_0 = \dot{z}_0 = 0$ may be set. The initial estimate $\varphi_0 = 0$ or is equal to a pitch angle of the carrier (such as a vehicle body). This is specifically determined based on a scenario or an application.

Step 2: Obtain a pitch angle estimate $\varphi_{k+1}$ of the first target based on data in the data subset of the first target, a velocity estimate $v_k$ of the first target, and a pitch angle estimate $\varphi_k$ of the target. A specific relational expression is as follows:

$$\varphi_{k+1} = \frac{\sum_{i=1}^{i=N_T} [\dot{r}_i - f_i(\varphi_k, v_k) + J_i(\varphi_k, v_k) \cdot \varphi_k]}{\sum_{i=1}^{i=N_T} J_i(\varphi_k, v_k)},$$

where

i=1, ..., $N_T$, and represents an index or a sequence number of the data in the data subset of the first target. $\boldsymbol{f_i}(\varphi_k, v_k)$ is a value of $\boldsymbol{f_i}(\varphi, v) = \Lambda_i v$ when $\varphi = \varphi_k$ and $v = v_k$, and $\boldsymbol{f_i}(\varphi_k, v_k)$ may be specifically represented as follows:

$$f_i(\varphi_k, \boldsymbol{v}_k) = v_x(k) \cdot \cos\varphi_k\cos\theta_i + v_y v_x(k) \cdot \cos\varphi_k\sin\theta_i + v_z v_x(k) \cdot \sin\varphi_k.$$

$J_i(\varphi_k, v_k)$ is a value of a first-order derivative of $\boldsymbol{f}_i(\varphi, v) = \Lambda_i v$ relative to $\varphi$ when $\varphi = \varphi_k$ and $v = v_k$, and $\boldsymbol{J}_i(\varphi_k, v_k)$ may be specifically represented as follows:

$$J_i(\varphi_k, \boldsymbol{v}_k) = -v_x(k) \cdot \sin\varphi_k \cos\theta_i - v_y(k) \cdot \sin\varphi_k \sin\theta_i + v_z(k) \cdot \cos\varphi_k.$$

Step 3: Obtain a velocity estimate $v_{k+1}$ of the first target based on the data in the data subset of the first target and the pitch angle estimate $\varphi_{k+1}$ of the first target. A specific relational expression is as follows:

$$\boldsymbol{v}_{k+1} = [\boldsymbol{\Lambda}^T(\varphi_{k+1})\boldsymbol{\Lambda}(\varphi_{k+1})]^{-1}\boldsymbol{\Lambda}^T(\varphi_{k+1})\dot{\mathbf{r}},$$

where

i=1, ..., $N_T$, and represents an index or a sequence number of the data in the data subset of the first target. $\Lambda(\varphi_{\boldsymbol{k+1}})$ and $\dot{\mathbf{r}}$ may be respectively represented as follows:

$$\boldsymbol{\Lambda}(\varphi_{k+1}) = \begin{bmatrix} \Lambda_1(\varphi_{k+1}) \\ \vdots \\ \Lambda_{N_T}(\varphi_{k+1}) \end{bmatrix}, \text{ and } \dot{\mathbf{r}} = \begin{bmatrix} \dot{\mathbf{r}}_1 \\ \vdots \\ \dot{\mathbf{r}}_{N_T} \end{bmatrix}.$$

$\Lambda_i(\varphi_{k+1}) = [\Lambda_{x,i}(\varphi_{k+1}), \Lambda_{y,i}(\varphi_{k+1}), \Lambda_{z,i}(\varphi_{k+1})]$, $\Lambda_{x,i} = \cos\varphi_{k+1}\cos\theta_i$, $\Lambda_{y,i} = \cos\varphi_{k+1}\sin\theta_i$, and $\Lambda_{z,i} = \sin\varphi_{k+1}$.

Alternatively, the foregoing step 2 may be replaced with the following: Obtain a pitch angle estimate $\varphi_{k+1}$ of the first target based on data in the data subset of the first target, a velocity estimate $v_{k+1}$ of the first target, and a pitch angle estimate $\varphi_k$ of the target. A specific relational expression is as follows:

$$\varphi_{k+1} = \frac{\sum_{i=1}^{i=N_T}[\dot{\mathbf{r}}_i - f_i(\varphi_k, v_{k+1}) + J_i(\varphi_k, v_{k+1}) \cdot \varphi_k]}{\sum_{i=1}^{i=N_T} J_i(\varphi_k, v_{k+1})},$$

where
i=1, ..., $N_T$, and represents an index or a sequence number of the data in the data subset of the first target. $f_i(\varphi_k, v_{k+1})$ is a value of $\boldsymbol{f}_i(\varphi, v) = \Lambda_i v$ when $\varphi = \varphi_k$ and $v = v_{k+1}$, and $\boldsymbol{f}_i(\varphi_k, v_{k+1})$ may be specifically represented as follows:

$$f_i(\varphi_k, \boldsymbol{v}_{k+1}) = v_x(k+1) \cdot \cos\varphi_k \cos\theta_i + v_y v_x(k+1) \cdot \cos\varphi_k \sin\theta_i + v_z v_x(k+1) \cdot \sin\varphi_k.$$

$J_i(\varphi_k, v_{k+1})$ is a value of a first-order derivative of $\boldsymbol{f}_i(\varphi, v) = \Lambda_i v$ relative to $\varphi$ when $\varphi = \varphi_k$ and $v = v_{k+1}$, and $\boldsymbol{J}_i(\varphi_k, v_{k+1})$ may be specifically represented as follows:

$$J_i(\varphi_k, \boldsymbol{v}_{k+1}) = -v_x(k+1) \cdot \sin\varphi_k \cos\theta_i - v_y(k+1) \cdot \sin\varphi_k \sin\theta_i + v_z(k+1) \cdot \cos\varphi_k.$$

The foregoing step 3 may be replaced with the following: Obtain a velocity estimate $v_{k+1}$ of the first target based on the data in the data subset of the first target and the pitch angle estimate $\varphi_k$ of the first target. A specific relational expression is as follows:

$$\boldsymbol{v}_{k+1} = [\boldsymbol{\Lambda}^T(\varphi_k)\boldsymbol{\Lambda}(\varphi_k)]^{-1}\boldsymbol{\Lambda}^T(\varphi_k)\dot{\mathbf{r}},$$

where
i=1, ..., $N_T$, and represents an index or a sequence number of the data in the data subset of the first target. $\Lambda(\varphi_{\boldsymbol{k}})$ and $\dot{\mathbf{r}}$ may be respectively represented as follows:

$$\Lambda(\varphi_k) = \begin{bmatrix} \Lambda_1(\varphi_k) \\ \vdots \\ \Lambda_{N_T}(\varphi_k) \end{bmatrix}, \text{ and } \dot{\mathbf{r}} = \begin{bmatrix} \dot{\mathbf{r}}_1 \\ \vdots \\ \dot{\mathbf{r}}_{N_T} \end{bmatrix}.$$

$\Lambda_i(\varphi_k) = [\Lambda_{x,i}(\varphi_k), \Lambda_{y,i}(\varphi_k), \Lambda_{z,i}(\varphi_k)]$, $\Lambda_{x,i}(\varphi_k) = cos\varphi_k cos\theta_i$, $\Lambda_{y,i}(\varphi_k) = cos\varphi_k sin\theta_i$, and $\Lambda_{z,i}(\varphi_k) = sin\varphi_k$.

In the foregoing relational expression, $\varphi_{k+1}$ and $v_{k+1}$ may be respectively obtained based on $\varphi_k$ and $v_k$, and further, $\varphi_{k+2}$ and $v_{k+2}$ are respectively obtained based on $\varphi_{k+1}$ and $v_{k+1}$. Similarly, $\varphi_N$ and $v_N$ are obtained after the foregoing steps are repeated N times or until a distance between two adjacent estimates $\varphi_N$, $v_N$ and $\varphi_{N11}$, $v_{N-1}$ of <p and $v$ is less than a predetermined threshold. Finally obtained $\varphi_N$ and $v_N$ are used as estimates of the pitch angle and the velocity of the first target.

It should be noted that all or different partial subsets of the data subset of the first target may be used in different iterative processes or different steps of step 2 or step 3.

For specific descriptions of the SSD criterion based on the brute-Force search algorithm or the SSD criterion based on limited value classification, refer to explanations and descriptions in the conventional technology. Details are not described.

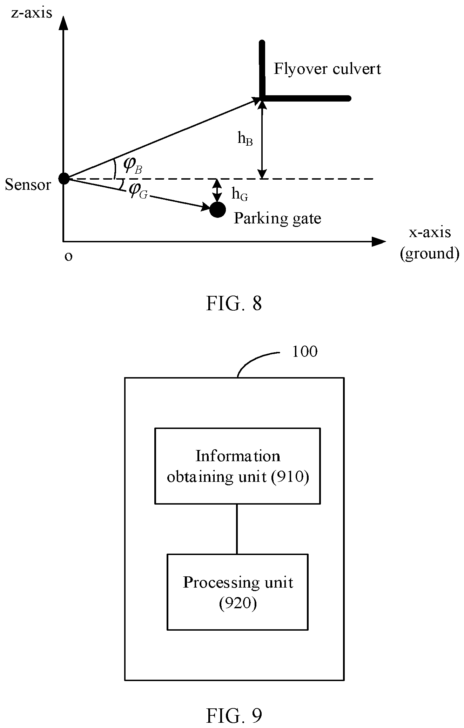

It should be noted that the height information or the pitch angle information obtained in the method provided in this embodiment of this application is the height information or the pitch angle information of the first target relative to the sensor. For example, FIG. 8 is a side view of a schematic diagram of determining the height information or the pitch angle information of the first target. As shown in FIG. 8, it is assumed that the first target is a flyover culvert. The target detection apparatus or module 100 may obtain height $h_B$ of the flyover culvert relative to the sensor or a pitch angle $\varphi_B$ of the flyover culvert relative to the sensor. It is assumed that the first target is a parking gate (also referred to as a parking barrier). The target detection apparatus or module 100 may obtain height $h_G$ of the parking gate (also referred to as a parking barrier) relative to the sensor or a pitch angle $\varphi_G$ of the parking gate (also referred to as a parking barrier) relative to the sensor.

As described above, in some scenarios, a static target is generally a main false alarm source in autonomous driving. For example, in the flyover culvert scenario shown in (a) in FIG. 6, the gantry scenario shown in (b) in FIG. 6, the height limit pole scenario shown in (c) in FIG. 6, and the parking gate (also referred to as a parking barrier) scenario shown in (d) in FIG. 6, a static suspended object such as the flyover culvert, the gantry scenario, the height limit pole, or the parking gate (also referred to as a parking barrier) is generally a main false alarm source in autonomous driving. Therefore, in this embodiment of this application, the data subset determined by the target detection apparatus or module 100 in step S401 may be a data subset of a static target. In other words, the first target is a static target.

In some embodiments, it may be learned, based on the following relational expression, that the data subset of the static object obtained from M pieces of data in the data set of the sensor is a data subset that is in the data set of the sensor and that meets the following relationship:

$$|\dot{\mathbf{r}}_k + \Lambda_k \mathbf{v}_s| \le \dot{\mathbf{r}}_{Th},$$

where k = 1, 2, ..., M.

$\mathbf{v}_s$ is a three-dimensional motion velocity vector of the sensor. $\mathbf{v}_s$ may be obtained by using a method such as pre-configuration or ego-motion velocity estimation. $\dot{\mathbf{r}}_k$ is a radial velocity in a $k^{th}$ piece of data in the data set of the sensor. $\Lambda_k$ is a direction cosine vector corresponding to $\dot{\mathbf{r}}_k$. $\dot{\mathbf{r}}_{Th}$ is a predefined threshold. For $\dot{\mathbf{r}}_k$ and $\Lambda_k$, refer to specific descriptions above. The data subset that is in the data set of the sensor and that meets the foregoing relationship may be understood as that projection components of radial velocity data of each piece of data in the data set of the sensor and a motion velocity of the sensor in a radial direction of the data meet a predefined threshold. The projection component of the motion velocity of the sensor in the radial direction of the data may be obtained based on a velocity vector of the sensor and position information of the data.

It should be understood that solutions in embodiments of this application may be properly combined and used, and explanations or descriptions of terms appearing in the embodiments may be mutually referenced or interpreted in the embodiments. This is not limited herein.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement the functions in any one of the foregoing embodiments, the target detection apparatus includes a corresponding hardware structure and/or software module that execute/executes various functions. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the target detection apparatus may be divided into function modules. For example, each function module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

For example, when function modules are obtained through division in an integrated manner, FIG. 9 is a block diagram of a structure of a target detection apparatus according to an embodiment of this application. A target detection apparatus or module 100 may include an information obtaining unit 910 and a processing unit 920.

The information obtaining unit 910 is configured to support the target detection apparatus or module 100 in determining a data subset of a first target. The data subset of the first target includes at least one piece of data including information about a distance, an azimuth, and a radial velocity of the first target relative to a sensor, and/or is used for another process of the technology described in this specification. The processing unit 920 is configured to support the target detection apparatus or module 100 in obtaining height information or pitch angle information of the first target relative to the sensor based on the data subset of the first target, and/or is used for another process of the technology described in this specification.

In some embodiments, the first target intersects road geometry, and the road geometry includes a road boundary or a lane line. The information obtaining unit 910 is specifically configured to: obtain a road geometric parameter, and invoke the processing unit 920 to determine the data subset of the first target based on the road geometric parameter. More specifically, that the information obtaining unit 910 obtains the road geometric parameter may include: The information obtaining unit 910 receives the road geometric parameter; or the information obtaining unit 910 invokes the processing unit 920 to obtain a data subset of the road geometry from a data set of the sensor through clustering, and invokes the processing unit 920 to determine the road geometric parameter based on the data subset of the road geometry. The data subset of the road geometry includes at least one piece of data including information about a distance, an azimuth, and a radial velocity of the road geometry relative to the sensor.

In some embodiments, that the information obtaining unit 910 determines the data subset of the first target based on the road geometric parameter may specifically include: The information obtaining unit 910 invokes the processing unit 920 to obtain a data subset of at least one cluster from the data set of the sensor through clustering, determine a geometric parameter of at least one target based on the data subset of the at least one cluster, and determine the data subset of the first target based on the geometric parameter of the at least one target and the road geometric parameter. The data subset of the first target is a data subset of a target that intersects the road geometry.

In some embodiments, the processing unit 920 is specifically configured to obtain height h of the first target relative to the sensor based on N pieces of data in the data subset of the first target and the following relational expression: $\dot{r}_i = \Lambda_i v + n_i$, where i = 1, 2, ..., N. $v$ is a three-dimensional motion velocity vector of the first target relative to the sensor, $\dot{r}_i$ is a radial velocity in an i$^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where

$$\Lambda_{x,i} = (r_i^2 - h_i^2)^{\frac{1}{2}}\cos\theta_i/r_i, \quad \Lambda_{y,i} = (r_i^2 - h_i^2)^{\frac{1}{2}}\sin\theta_i/r_i$$

, $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error.

In some other embodiments, the processing unit 920 is specifically configured to obtain a pitch angle $\varphi$ of the first target relative to the sensor based on N pieces of data in the data subset of the first target and the following relational expression: $\dot{r}_i = \Lambda_i v + n_i$, where i = 1, 2, ..., N. $v$ is a three-dimensional motion velocity vector of the first target relative to the sensor, $\dot{r}_i$ is a radial velocity in an i$^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}, \Lambda_{y,i}, \Lambda_{z,i}]$, where $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \tilde{\varphi}_i$, and $\tilde{\varphi}_i$ is a pitch angle error.

In some other embodiments, the processing unit 920 is specifically configured to obtain the height information or the pitch angle information of the first target relative to the sensor based on a square error criterion and an SSD criterion.

In some embodiments, the first target is a static object. The processing unit 920 may be specifically configured to obtain the data subset of the first target from M pieces of data in the data set of the sensor, where the data subset of the first target meets the following relational expression: $|\dot{r}_k + \Lambda_k v_s| \le \dot{r}_{Th}$, where k = 1, 2, ..., M. $v_s$ is a three-dimensional motion velocity vector of the sensor, $\dot{r}_k$ is a radial velocity in a k$^{th}$ piece of data in the data set of the sensor, $\Lambda_k$ is a

direction cosine vector corresponding to $\dot{r}_k$, and $\dot{r}_{Th}$ is a predefined threshold.

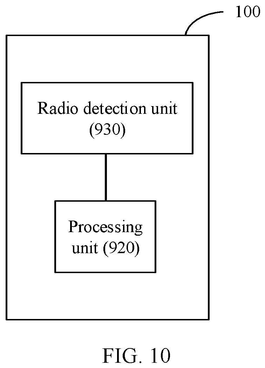

In a possible structure, as shown in FIG. 10, the information obtaining unit 910 may be replaced with a radio detection unit 930 such as a sensor, configured to obtain the data set of the sensor through detection. The data set of the sensor includes at least one piece of data including information about a distance, an azimuth, and a radial velocity of the first target relative to the sensor. For example, the data set of the sensor includes distances, azimuths, radial velocities, and the like of a plurality of points of one or more targets relative to the radio detection unit 930, and/or is used for another process of the technology described in this specification.

In an optional manner, when data transmission is implemented by using software, data transmission may be completely or partially implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (Solid-State Drive, SSD)), or the like.

Method or algorithm steps described in combination with embodiments of this application may be implemented by hardware, or may be implemented by a processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a detection apparatus. Certainly, the processor and the storage medium may exist in the detection apparatus as discrete components.

Based on the foregoing descriptions of the implementations, a person skilled in the art may clearly understand that for the purpose of convenient and brief descriptions, division into the foregoing functional modules is merely used as an example for description. In actual application, the foregoing functions can be allocated to different functional modules for implementation based on a requirement, that is, an inner structure of an apparatus is divided into different functional modules to implement all or a part of the functions described above.

In an optional manner, a chip system is provided in this application. The chip system includes a processor and a memory, and the memory stores computer program code. When the computer program code is executed by the processor, the method in any possible implementation provided in this application is implemented. The chip system may include a chip, or may include a chip and another discrete device.

In the several embodiments provided in this application, it should be understood that the disclosed apparatuses and methods may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, and may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a ROM, a RAM, a magnetic disk, or an optical disc.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A target detection method, wherein the method comprises:

    determining a data subset of a first target, wherein the data subset of the first target comprises at least one piece of data, and the data comprises information about a distance, an azimuth, and a radial velocity of the first target relative to a sensor; and
    obtaining height information or pitch angle information of the first target relative to the sensor based on the data subset of the first target.

2.  The method according to claim 1, wherein the first target intersects road geometry; and
    the road geometry comprises a road boundary or a lane line.

3.  The method according to claim 2, wherein the determining a data subset of a first target comprises:

    obtaining a road geometric parameter; and
    determining the data subset of the first target based on the road geometric parameter; and
    the obtaining a road geometric parameter comprises:

        receiving the road geometric parameter; or
        obtaining a data subset of the road geometry from a data set of the sensor through clustering, wherein the data subset of the road geometry comprises at least one piece of data, and the data comprises information about a distance, an azimuth, and a radial velocity of the road geometry relative to the sensor; and
        determining the road geometric parameter based on the data subset of the road geometry.

4.  The method according to claim 3, wherein the determining the data subset of the first target based on the road geometric parameter comprises:

    obtaining a data subset of at least one cluster from the data set of the sensor through clustering;
    determining a geometric parameter of at least one target based on the data subset of the at least one cluster; and
    determining the data subset of the first target based on the geometric parameter of the at least one target and the road geometric parameter, wherein the data subset of the first target is a data subset of a target that intersects the road geometry.

5.  The method according to claim 4, wherein the geometric parameter of the target is a first polynomial parameter, the road geometric parameter is a second polynomial parameter, and the first polynomial parameter and the second polynomial parameter are used to determine a geometric relationship between the first target and the road geometry.

6.  The method according to any one of claims 1 to 5, wherein the obtaining height information of the first target relative to the sensor based on the data subset of the first target comprises:

    obtaining height h of the first target relative to the sensor based on N pieces of data in the data subset of the first target and the following relational expression:

$$\dot{r}_i = \Lambda_i \boldsymbol{v} + n_i,$$

    wherein i = 1, 2, ..., N: and

$v$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i} \ \Lambda_{y,i} \ \Lambda_{z,i}]$, wherein $\Lambda_{x,i} = (r_i^2 - h_i^2)^{\frac{1}{2}}\cos\theta_i/r_i$ , $\Lambda_{y,i} = (r_i^2 - h_i^2)^{\frac{1}{2}}\sin\theta_i/r_i$ , $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error.

7. The method according to any one of claims 1 to 5, wherein the obtaining pitch angle information of the first target relative to the sensor based on the data subset of the first target comprises:

obtaining a pitch angle $\varphi$ of the first target relative to the sensor based on N pieces of data in the data subset of the first target and the following relational expression:

$$\dot{r}_i = \Lambda_i v + n_i,$$

wherein i = 1, 2, ..., N: and
$v$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i} \ \Lambda_{y,i} \ \Lambda_{z,i}]$, wherein $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \tilde{\varphi}_i$, and $\tilde{\varphi}_i$ is a pitch angle error.

8. The method according to any one of claims 1 to 7, wherein the height information or the pitch angle information of the first target relative to the sensor is obtained based on a square error criterion and an SSD criterion.

9. The method according to any one of claims 1 and 8, wherein the first target is a static target.

10. The method according to claim 9, wherein the determining a data subset of a first target comprises:

obtaining the data subset of the first target from M pieces of data in the data set of the sensor, wherein the data subset of the first target meets the following relationship:

$$|\dot{r}_k + \Lambda_k v_s| \le \dot{r}_{Th}$$

, wherein k = 1, 2, ..., M; and
$v_s$ is a three-dimensional motion velocity vector of the sensor, $\dot{r}_k$ is a radial velocity in a $k^{th}$ piece of data in the data set of the sensor, $\Lambda_k$ is a direction cosine vector corresponding to $\dot{r}_k$, and $\dot{r}_{Th}$ is a predefined threshold.

11. A target detection apparatus, wherein the apparatus comprises:

an information obtaining unit, configured to determine a data subset of a first target, wherein the data subset of the first target comprises at least one piece of data, and the data comprises information about a distance, an azimuth, and a radial velocity of the first target relative to a sensor; and
a processing unit, configured to obtain height information or pitch angle information of the first target relative to the sensor based on the data subset of the first target.

12. The apparatus according to claim 11, wherein the first target intersects road geometry; and
the road geometry comprises a road boundary or a lane line.

13. The apparatus according to claim 12, wherein the information obtaining unit is specifically configured to:
obtain a road geometric parameter; and

determine the data subset of the first target based on the road geometric parameter; and

the obtaining a road geometric parameter comprises:

receiving the road geometric parameter; or
obtaining a data subset of the road geometry from a data set of the sensor through clustering, wherein the data subset of the road geometry comprises at least one piece of data, and the data comprises information about a distance, an azimuth, and a radial velocity of the road geometry relative to the sensor; and determining the road geometric parameter based on the data subset of the road geometry.

14. The apparatus according to claim 13, wherein the determining the data subset of the first target based on the road geometric parameter comprises:

obtaining a data subset of at least one cluster from the data set of the sensor through clustering;
determining a geometric parameter of at least one target based on the data subset of the at least one cluster; and
determining the data subset of the first target based on the geometric parameter of the at least one target and the road geometric parameter, wherein the data subset of the first target is a data subset of a target that intersects the road geometry.

15. The apparatus according to claim 14, wherein the geometric parameter of the target is a first polynomial parameter, the road geometric parameter is a second polynomial parameter, and the first polynomial parameter and the second polynomial parameter are used to determine a geometric relationship between the first target and the road geometry.

16. The apparatus according to any one of claims 11 to 15, wherein the obtaining height information of the first target relative to the sensor based on the data subset of the first target comprises:

obtaining height h of the first target relative to the sensor based on N pieces of data in the data subset of the first target and the following relational expression:

$$\dot{r}_i = \Lambda_i \boldsymbol{v} + n_i,$$

wherein i = 1, 2, ... , N; and
$\boldsymbol{v}$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}\ \Lambda_{y,i}\ \Lambda_{z,i}]$, wherein $\Lambda_{x,i} = (r_i^2 - h_i^2)^{\frac{1}{2}}\cos\theta_i/r_i$ , $\Lambda_{y,i} = (r_i^2 - h_i^2)^{\frac{1}{2}}\sin\theta_i/r_i$ , $\Lambda_{z,i} = h_i/r_i$, $\theta_i$ is an azimuth corresponding to $\dot{r}_i$, $h_i$ is height corresponding to $\dot{r}_i$, $h_i = h + \tilde{h}_i$, and $\tilde{h}_i$ is a height error.

17. The apparatus according to any one of claims 11 to 15, wherein the obtaining height information of the first target relative to the sensor based on the data subset of the first target comprises:

obtaining a pitch angle φ of the first target relative to the sensor based on N pieces of data in the data subset of the first target and the following relational expression:

$$\dot{r}_i = \Lambda_i \boldsymbol{v} + n_i,$$

wherein i = 1, 2, ..., N; and
$\tilde{h}_i$ is a three-dimensional motion velocity vector of the first target relative to the sensor, $\dot{r}_i$ is a radial velocity in an $i^{th}$ piece of data in the data subset of the first target, $n_i$ is an error or noise corresponding to $\dot{r}_i$, $\Lambda_i$ is a direction cosine vector corresponding to $\dot{r}_i$, and $\Lambda_i = [\Lambda_{x,i}\ \Lambda_{y,i}\ \Lambda_{z,i}]$, wherein $\Lambda_{x,i} = \cos\varphi_i\cos\theta_i/r_i$, $\Lambda_{y,i} = \cos\varphi_i\sin\theta_i/r_i$, $\Lambda_{z,i} = \sin\varphi_i$, $\theta_i$ is an azimuth corresponding to $\dot{r}_i$, $\varphi_i$ is a pitch angle corresponding to $\dot{r}_i$, $\varphi_i = \varphi + \tilde{\varphi}_i$, and $\tilde{\varphi}_i$ is a pitch angle error.

18. The apparatus according to any one of claims 11 to 17, wherein the height information or the pitch angle information of the first target relative to the sensor is obtained based on a square error criterion and an SSD criterion.

19. The apparatus according to any one of claims 11 and 18, wherein the first target is a static target.

20. The apparatus according to any one of claims 11 to 19, wherein the processing unit is specifically configured to:

    obtain the data subset of the first target from M pieces of data in the data set of the sensor, wherein the data subset of the first target meets the following relationship:

$$|\dot{r}_k + \mathbf{\Lambda}_k \mathbf{v}_s| \leq \dot{r}_{Th},$$

    wherein k = 1, 2, ... , M; and
    $\mathbf{v}_s$ is a three-dimensional motion velocity vector of the sensor, $\dot{r}_k$ is a radial velocity in a $k^{th}$ piece of data in the data set of the sensor, $\mathbf{\Lambda}_k$ is a direction cosine vector corresponding to $\dot{r}_k$, and $\dot{r}_{Th}$ is a predefined threshold.

21. A target detection apparatus, wherein the apparatus comprises:

    a memory, configured to store a computer program;
    a transceiver, configured to: receive or send a radio signal; and
    a processor, configured to execute the computer program, to implement the target detection method according to any one of claims 1 to 10.

22. A computer-readable storage medium, wherein the computer-readable storage medium stores computer program code, and when the computer program code is executed by a processing circuit, the target detection method according to any one of claims 1 to 10 is implemented.

23. A chip system, wherein the chip system comprises a processing circuit and a storage medium, the storage medium stores computer program code, and when the computer program code is executed by the processing circuit, the target detection method according to any one of claims 1 to 10 is implemented.

FIG. 1

FIG. 2

100

Wi-Fi apparatus — 306

301

Positioning
apparatus — 307

Power supply
apparatus — 309

Memory — 303

Peripheral
Interface — 308

Processor

Bluetooth
apparatus — 305

Wireless apparatus — 302

Radar

Radio frequency
circuit

304

Display

FIG. 3

Determine a data subset of a first target — S401

Obtain height information or pitch angle
information of the first target relative to a sensor
based on the data subset of the first target — S402

FIG. 4

FIG. 5

FIG. 6

FIG. 7

FIG. 8

FIG. 9

100

Radio detection unit (930)

Processing unit (920)

FIG. 10

## INTERNATIONAL SEARCH REPORT

| International application No. |
|---|
| **PCT/CN2020/088522** |

**A.    CLASSIFICATION OF SUBJECT MATTER**

G01S 13/52(2006.01)i;  G01S 13/931(2020.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 自动驾驶, 先进驾驶辅助系统, 汽车, 车辆, 障碍物, 悬空物, 隧道, 立交桥, 龙门架, 距离, 方位角, 径向速度, 高度, 俯仰角, advanced driver assistant system, autonomous driving, car, vehicle, obstacle, suspended object, tunnel, overpass, portal frame, distance, azimuth, radial velocity, height, pitch angle

**C.    DOCUMENTS CONSIDERED TO BE RELEVANT**

| Category* | Citation of document, with indication, where appropriate, of the relevant passages | Relevant to claim No. |
|---|---|---|
| X | CN 109489562 A (THE 44TH INSTITUTE OF CHINA ELECTRONICS TECHNOLOGY GROUP CORPORATION) 19 March 2019 (2019-03-19) description, paragraphs [0023]-[0055], and figures 1-8 | 1-23 |
| X | CN 109017570 A (ZHICHE YOUXING TECHNOLOGY (BEIJING) CO., LTD.) 18 December 2018 (2018-12-18) description, paragraphs [0076]-[0176], and figures 1-3 | 1-23 |
| A | CN 110554376 A (FORD GLOBAL TECHNOLOGIES, LLC.) 10 December 2019 (2019-12-10) entire document | 1-23 |
| A | US 2017023678 A1 (BOSCH GMBH ROBERT) 26 January 2017 (2017-01-26) entire document | 1-23 |

☐ Further documents are listed in the continuation of Box C.        ☑ See patent family annex.

| | | |
|---|---|---|
| *    Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "E"    earlier application or patent but published on or after the international filing date | "X" | document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&" | document member of the same patent family |

| Date of the actual completion of the international search | Date of mailing of the international search report |
|---|---|
| **11 December 2020** | **20 January 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/088522**

| Patent document cited in search report | | | Publication date (day/month/year) | Patent family member(s) | | | Publication date (day/month/year) |
|---|---|---|---|---|---|---|---|
| CN | 109489562 | A | 19 March 2019 | CN | 209485274 | U | 11 October 2019 |
| CN | 109017570 | A | 18 December 2018 | None | | | |
| CN | 110554376 | A | 10 December 2019 | DE | 102019114511 | A1 | 05 December 2019 |
| | | | | US | 2019369222 | A1 | 05 December 2019 |
| | | | | US | 10634777 | B2 | 28 April 2020 |
| US | 2017023678 | A1 | 26 January 2017 | DE | 102015213701 | A1 | 26 January 2017 |
| | | | | US | 10241206 | B2 | 26 March 2019 |

Form PCT/ISA/210 (patent family annex) (January 2015)